# EUROPEAN PATENT APPLICATION

(11) **EP 4 844 840 A1**
(43) Date of publication of application: **25.11.2026**
(21) Application number: 25742030.7
(22) Date of filing: 17.01.2025
(51) Int. Cl.: H01M 4/62, C08F 20/42, C08F 220/42, C08L 33/18, H01M 4/13, H01M 4/139

(54) **COMPOSITION, BINDER COMPOSITION FOR SECONDARY BATTERIES, MOLDED ARTICLE, ELECTRODE, AND BATTERY**

(30) Priority: 19.01.2024 JP 2024006502
(71) Applicant: Kuraray Co., Ltd., Kurashiki-shi, Okayama 710-0801 (JP)
(72) Inventor: IISHIBA, Kazuki, Tsukuba-shi, Ibaraki 305-0841 (JP); INATOMI, Atsushi, Tsukuba-shi, Ibaraki 305-0841 (JP); NAGATA, Kyohei, Kurashiki-shi, Okayama 710-0801 (JP)
(74) Representative: Müller-Boré & Partner Patentanwälte PartG mbB
(86) International application number: PCT/JP2025/001403
(87) International publication number: WO 2025/154805

(57) **Abstract**

The present invention relates to a composition containing a polymer (A) containing a constitutional unit (a) derived from 1,1-dicyanoethylene, and an electrode active substance; a molded article formed with the composition; an electrode including the molded article; a battery including the molded article; a binder composition for secondary batteries, containing a polymer (A) containing a constitutional unit (a) derived from 1,1-dicyanoethylene, and an electrode active substance; a molded article formed with the binder composition for secondary batteries; an electrode including the molded article formed with the binder for secondary batteries; and a battery including the molded article formed with the binder for secondary batteries.

## Description

### Technical Field

The present invention relates to a composition, a binder composition for secondary batteries, a molded article, an electrode, and a battery.

### Background Art

PTL 1 describes a nonaqueous electrolyte battery. A nonaqueous electrolyte battery is equipped with a positive electrode, a negative electrode, and a nonaqueous electrolyte. The negative electrode generally contains a negative electrode active substance and a binder for a negative electrode. PTL 1 proposes the use of polyvinylidene fluoride (which may be hereinafter referred to as "PVDF") having a molecular weight of 400,000 or more and 1,000,000 or less as the binder for a negative electrode.

PTL 2 describes a binder composition for an electrode of a secondary battery. The binder composition described in PTL 2 contains a copolymer containing three kinds of constitutional units, and one of the constitutional units is derived from a nitrile group-containing monomer, an ether group-containing monomer, an epoxy group-containing monomer, a carbonyl group-containing monomer, a fluorine-containing monomer, or a combination thereof (claim 1). PTL 2 also describes vinylidene cyanide (which is an alternative name of "1,1-dicyanoethylene") as one example of a nitrile group-containing monomer (claim 6).

### Citation List

### Patent Literatures

PTL 1: WO 2017/154908
PTL 2: WO 2021/254300

### Summary of Invention

### Technical Problem

In recent years, from the standpoint of reducing the environmental load, there is a demand for avoiding the use of halogen-containing materials. In this point, polyvinylidene fluoride described in PTL 1 corresponds to the halogen-containing material due to fluorine contained therein. Therefore, there is a demand for an alternative material of polyvinylidene fluoride in the technical fields using an electrode active substance, such as a nonaqueous electrolyte battery.

PTL 2 describes vinylidene cyanide as one example of the monomer capable of forming one of the constitutional units. However, PTL 2 also describes a fluorine-containing monomer as another example of the monomer capable of forming the constitutional unit. Therefore, the technique described in PTL 2 is not a technique aiming at avoiding the use of a halogen-containing material. Specifically, PTL 2 does not teach the use of vinylidene cyanide in place of a fluorine-containing monomer for forming one of the constitutional units, and actually does not describe a constitutional unit formed with vinylidene cyanide in the examples.

The present invention has been made in view of the problems described above, and a problem thereof is to provide a composition that contains an electrode active substance, reduces the environmental load, and is excellent in oxidation resistance, a binder composition for secondary batteries, a molded article, an electrode, and a battery.

### Solution to Problem

The present invention provides the following.
[1] A composition containing a polymer (A) containing a constitutional unit (a) derived from 1,1-dicyanoethylene, and an electrode active substance.
[2] The composition according to the item [1], in which the polymer (A) is a copolymer containing at least one kind of a constitutional unit (b) derived from a compound represented by the following general formula (1):

   CH₂=CR¹R² (1)

   in which,
   R¹ represents one kind selected from the group consisting of a hydrogen atom, an alkyl group, a cycloalkyl group, an aryl group, an alkoxy group, and a nitrile group, and
   R² represents one kind selected from the group consisting of a hydrogen atom, an alkyl group, an alkoxy group, a carboxy group, an ester group represented by -COOR³ (in which R³ represents an alkyl group having 1 to 12 carbon atoms), an acid anhydride group, an acyl group represented by -COR⁴ (in which R⁴ represents an alkyl group having 1 to 12 carbon atoms), an acyloxy group represented by -OCOR⁵ (in which R⁵ represents an alkyl group having 1 to 12 carbon atoms), and a cyanoalkyl group.
[3] The composition according to the item [2], in which the compound represented by the general formula (1) is at least one kind selected from the group consisting of ethylene, propylene, vinyl acetate, methyl methacrylate, styrene, and isobutylene.
[4] The composition according to the item [2] or [3], in which the compound represented by the general formula (1) has an e-value of 0.50 or less.
[5] The composition according to any one of the items [2] to [4], in which the polymer (A) contains an alternating copolymerization structure [(b)-(a)-(b)] formed by bonding two of the constitutional units (b) to both sides of the constitutional unit (a) at the center, and the polymer (A) has a content of the constitutional unit (a) that forms the alternating copolymerization structure [(b)-(a)-(b)] of 80% by mol or more based on 100% by mol in total of the constitutional unit (a) contained in the polymer (A).
[6] The composition according to any one of the items [1] to [5], in which the polymer (A) has a content of the constitutional unit (a) of 25 to 75% by mol based on the total amount of 100% by mol of the constitutional units of the polymer (A).
[7] The composition according to any one of the items [1] to [6], in which the polymer (A) has a mass degree of swelling in an electrolyte solution of 101 to 800% by mass.
[8] The composition according to any one of the items [1] to [7], in which the polymer (A) has a voltage value at which a cumulative value of a current value calculated by a cyclic voltammetry measurement reaches 0.05 µA/cm² of 4.0 V or more.
[9] A binder composition for secondary batteries, containing a polymer (A) containing a constitutional unit (a) derived from 1,1-dicyanoethylene, and an electrode active substance.
[10] The binder composition for secondary batteries according to the item [9], in which the electrode active substance is a positive electrode active substance.
[11] A molded article formed with the composition according to any one of the items [1] to [8] or the binder composition for secondary batteries according to the item [9] or [10].
[12] An electrode including the molded article according to the item [11].
[13] A battery including the molded article according to the item [11].

### Advantageous Effects of Invention

The present invention can provide a composition that contains an electrode active substance, reduces the environmental load, and is excellent in oxidation resistance, a binder composition for secondary batteries, a molded article, an electrode, and a battery.

### Description of Embodiments

The present invention is described below based on one example of an embodiment for carrying out the present invention (which may be referred to as a "present embodiment"). However, the embodiment described below is an example for embodying the technical concept of the present invention, and the present invention is not limited to the description below.

In the description herein, preferred embodiments of the embodiment are described, and a combination of two or more of the preferred embodiments is also a preferred embodiment. As for an item shown by a numerical range, in the case where multiple numerical ranges exist, the lower limit values and the upper limit values thereof can be selectively combined and can be designated as a preferred embodiment.

In the description herein, an expression "XX to YY" for a numerical range means "XX or more and YY or less".

In the description herein, the "total amount of 100% by mass of the composition" does not include the content of the "solvent" described later. Therefore, in the case where the composition as one embodiment of the present invention contains a solvent, the "total amount of 100% by mass of the composition" has the same meaning as the "total amount of 100% by mass of the composition except for the solvent therein".

In the description herein, the "total amount of 100% by mol of the constitutional units of the polymer (A)" means the total amount of constitutional units derived from the raw material monomers, and does not include a constitutional unit derived from an initiator used in polymerization.

In the description herein, unless otherwise indicated, the expression "oxidation resistance" means a characteristic feature of the polymer (A) contained in the composition as one embodiment of the present invention, and is specifically the characteristic feature that is evaluated by the method described in the examples.

### [Composition]

The composition according to one embodiment of the present invention contains a polymer containing a constitutional unit (a) derived from 1,1-dicyanoethylene (which may be hereinafter referred to as a "polymer (A)"), and an electrode active substance. The present embodiment can provide a composition that contains an electrode active substance, reduces the environmental load, and is excellent in oxidation resistance. The composition may contain one kind of the polymer (A) alone, or may contain two or more kinds thereof in combination. In the case where the composition is applied to a battery, the polymer (A) can function as a binder. Therefore, in one aspect of the composition, the composition is a binder composition for secondary batteries.

### <Polymer (A)>

The polymer (A) contained in the composition contains a constitutional unit (a) derived from 1,1-dicyanoethylene. The polymer (A) contained in the composition may be a copolymer containing the constitutional unit (a) and a constitutional unit other than the constitutional unit (a). The polymer (A) is preferably the copolymer.

### (Constitutional Unit (a))

The constitutional unit (a) is derived from 1,1-dicyanoethylene.

1,1-Dicyanoethylene may be produced by the production method described in J. Am. Chem. Soc., (U.S.), 1989, Vol. 111, No. 25, p. 9078-9081, or the production method described in US 2,476,270 B. 1,1-Dicyanoethylene is preferably produced by the production method described in Production Example 1 described later.

The content of the constitutional unit (a) in the polymer (A) is preferably 1% by mol or more, more preferably 5% by mol or more, further preferably 10% by mol or more, and still further preferably 20% by mol or more, based on the total amount of 100% by mol of the constitutional units of the polymer (A), from the standpoint of facilitating the effects of the present invention. The upper limit of the content of the constitutional unit (a) in the polymer (A) is 100% by mol, and for example, may be 95% by mol or less, or 90% by mol or less.

In one embodiment of the present invention, the content of the constitutional unit (a) in the polymer (A) is still further preferably 20% by mol or more, still more further preferably 25% by mol or more, even further preferably 30% by mol or more, even still further preferably 35% by mol or more, and even still more further preferably 40% by mol or more, based on the total amount of 100% by mol of the constitutional units of the polymer (A), from the standpoint of providing the polymer (A) that is excellent in oxidation resistance. As described above, the lower limit values and the upper limit values described in a stepwise manner each can be independently combined. For example, in one embodiment of the present invention, the content of the constitutional unit (a) in the polymer (A) is preferably 1 to 100% by mol, more preferably 5 to 100% by mol, further preferably 10 to 100% by mol, still further preferably 20 to 100% by mol, still more further preferably 25 to 100% by mol, even further preferably 30 to 100% by mol, even still further preferably 35 to 100% by mol, and even still more further preferably 40 to 100% by mol, based on the total amount of 100% by mol of the constitutional units of the polymer (A). The content thereof may also be, for example, 1 to 95% by mol, 5 to 95% by mol, 10 to 95% by mol, 20 to 95% by mol, 25 to 95% by mol, 30 to 95% by mol, 35 to 95% by mol, 40 to 95% by mol, 1 to 90% by mol, 5 to 90% by mol, 10 to 90% by mol, 20 to 90% by mol, 25 to 90% by mol, 30 to 90% by mol, 35 to 90% by mol, or 40 to 90% by mol.

The mechanism that allows the polymer (A) to be excellent in oxidation resistance is considered to reside in the constitutional unit (a) that contains the two strongly electron-withdrawing cyano groups of 1,1-dicyanoethylene.

In one embodiment of the present invention, the content of the constitutional unit (a) in the polymer (A) is yet further preferably 25 to 75% by mol, yet still further preferably 30 to 70% by mol, yet still more further preferably 35 to 65% by mol, yet even further preferably 40 to 60% by mol, and yet even still further preferably 45 to 55% by mol, based on the total amount of 100% by mol of the constitutional units of the polymer (A), from the standpoint of facilitating the achievement of the molded article, electrode, and battery that are excellent in electrochemical stability. In this case, the polymer (A) is a copolymer.

### (Additional Constitutional Unit)

The polymer (A) may contain an additional constitutional unit that is a constitutional unit other than the constitutional unit (a). The first example of the additional constitutional unit is a constitutional unit derived from an olefin having two or more main chain carbon atoms or a derivative thereof. The second example of the additional constitutional unit is a constitutional unit other than the first example.

### [First Example of Additional Constitutional Unit]

The polymer (A) preferably contains a constitutional unit derived from an olefin having two or more main chain carbon atoms or a derivative thereof. Such a constitutional unit contained in the polymer (A) allows the properties based on the constitutional unit to be achieved. The constitutional unit derived from an olefin having two or more main chain carbon atoms or a derivative thereof is preferred from the standpoint that the constitutional unit is excellent in hydrophobicity, and therefore, for example, can reduce the solubility of the polymer (A) in a polar solvent, such as an electrolyte solution, thereby enhancing the swellability thereof in an electrolyte solution.

### {Constitutional Unit (b)}

The constitutional unit derived from an olefin having two or more main chain carbon atoms or a derivative thereof is preferably a constitutional unit (b) derived from a compound represented by the following general formula (1). Therefore, it is preferred that the polymer (A) is preferably a copolymer that contains the constitutional unit (a), and also contains at least one kind of a constitutional unit (b) derived from a compound represented by the following general formula (1).

CH₂=CR¹R² (1)

In the general formula (1),
R¹ represents one kind selected from the group consisting of a hydrogen atom, an alkyl group, a cycloalkyl group, an aryl group, an alkoxy group, and a nitrile group, and
R² represents one kind selected from the group consisting of a hydrogen atom, an alkyl group, an alkoxy group, a carboxy group, an ester group represented by -COOR³ (in which R³ represents an alkyl group having 1 to 12 carbon atoms), an acid anhydride group, an acyl group represented by -COR⁴ (in which R⁴ represents an alkyl group having 1 to 12 carbon atoms), an acyloxy group represented by -OCOR⁵ (in which R⁵ represents an alkyl group having 1 to 12 carbon atoms), and a cyanoalkyl group.

In the general formula (1), the alkyl group that can be represented by R¹ is preferably an alkyl group having 1 to 12 carbon atoms, more preferably an alkyl group having 1 to 8 carbon atoms, further preferably an alkyl group having 1 to 6 carbon atoms, and still further preferably an alkyl group having 1 to 4 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

The cycloalkyl group that can be represented by R¹ is preferably a cycloalkyl group having 3 to 12 carbon atoms, more preferably a cycloalkyl group having 3 to 8 carbon atoms, and further preferably a cycloalkyl group having 3 to 6 carbon atoms, and examples thereof include a cyclopropyl group, a cyclobutyl group, a cyclopentyl group, and a cyclohexyl group.

The aryl group that can be represented by R¹ is preferably an aryl group having 6 to 20 carbon atoms, more preferably an aryl group having 6 to 14 carbon atoms, and further preferably an aryl group having 6 to 10 carbon atoms, and examples thereof include a phenyl group, a tolyl group, a xylyl group, and a naphthyl group.

The alkoxy group that can be represented by R¹ is preferably an alkoxy group having 1 to 12 carbon atoms, more preferably an alkoxy group having 1 to 6 carbon atoms, and further preferably an alkoxy group having 1 to 4 carbon atoms, and examples thereof include a methoxy group, an ethoxy group, an n-propoxy group, an isopropoxy group, an n-butoxy group, an isobutoxy group, a sec-butoxy group, and a tert-butoxy group.

From the standpoint of enhancing the oxidation resistance, R¹ preferably represents a hydrogen atom, an alkyl group having 1 to 6 carbon atoms, or an aryl group having 6 to 10 carbon atoms, more preferably a hydrogen atom or an alkyl group having 1 to 4 carbon atoms, and further preferably a hydrogen atom, a methyl group, an ethyl group, an n-propyl group, or an n-butyl group. In one embodiment of the present invention, R¹ still further preferably represents a hydrogen atom or a methyl group. From the standpoint of enhancing the heat resistance, R¹ may represent an aryl group having 6 to 10 carbon atoms, and preferably represents a phenyl group.

In the general formula (1), the alkyl group that can be represented by R² is preferably an alkyl group having 1 to 12 carbon atoms, more preferably an alkyl group having 1 to 8 carbon atoms, further preferably an alkyl group having 1 to 6 carbon atoms, and still further preferably an alkyl group having 1 to 4 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

The alkoxy group that can be represented by R² is preferably an alkoxy group having 1 to 10 carbon atoms, more preferably an alkoxy group having 1 to 6 carbon atoms, and further preferably an alkoxy group having 1 to 4 carbon atoms, and examples thereof include a methoxy group, an ethoxy group, an n-propoxy group, an isopropoxy group, an n-butoxy group, an isobutoxy group, a sec-butoxy group, and a tert-butoxy group.

R² may represent an ester group represented by -COOR³, in which R³ represents an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, an n-hexyl group, a heptyl group, an octyl group, a decyl group, and a dodecyl group. The alkyl group represented by R³ may be substituted, for example, by one or multiple cyano groups or one or multiple alkoxy groups. In one aspect of R³, R³ preferably represents a monocyanoalkyl group, and more preferably a 2-cyanoethyl group. In another aspect of R³, R³ preferably represents an alkoxyalkyl group.

Examples of the acid anhydride group that can be represented by R² include acid anhydride groups derived from phthalic anhydride, maleic anhydride, trimellitic anhydride, pyromellitic dianhydride, hexahydrophthalic anhydride, tetrahydrophthalic anhydride, methyl nadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

R² may represent an acyl group represented by -COR⁴, in which R⁴ represents an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

R² may represent an acyloxy group represented by -OCOR⁵, in which R⁵ represents an alkyl group having 1 to 12 carbon atoms, preferably an alkyl group having 1 to 8 carbon atoms, and more preferably an alkyl group having 1 to 6 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group. In one aspect of R⁵, R⁵ further preferably represents an alkyl group having 1 to 4 carbon atoms, still further preferably a methyl group or an ethyl group, and still more further preferably an ethyl group.

The cyanoalkyl group that can be represented by R² is preferably an alkyl group having 2 to 12 carbon atoms having a cyano group. The cyanoalkyl group represented by R² may have one or multiple cyano groups. In one aspect of R², the cyanoalkyl group represented by R² is more preferably an alkyl group having 2 to 6 carbon atoms having one cyano group, and further preferably an alkyl group having 2 to 4 carbon atoms having one cyano group.

From the standpoint of enhancing the oxidation resistance, R² preferably represents a hydrogen atom, an alkyl group having 1 to 6 carbon atoms, an acyloxy group having 1 to 6 carbon atoms, or an aryl group having 6 to 10 carbon atoms, more preferably a hydrogen atom, an alkyl group having 1 to 4 carbon atoms, or an acyloxy group having 1 to 4 carbon atoms, and further preferably a hydrogen atom, a methyl group, an ethyl group, an n-propyl group, an n-butyl group, or an acetyloxy group. From the standpoint of enhancing the heat resistance, R² may represent an aryl group having 6 to 10 carbon atoms, and preferably represents a phenyl group.

From the standpoint of enhancing the oxidation resistance, it is preferred that R¹ represents a hydrogen atom, an alkyl group having 1 to 6 carbon atoms, or an aryl group having 6 to 10 carbon atoms, and R² represents a hydrogen atom, an alkyl group having 1 to 6 carbon atoms, an acyloxy group having 1 to 6 carbon atoms, or an aryl group having 6 to 10 carbon atoms, it is more preferred that R¹ represents a hydrogen atom or an alkyl group having 1 to 4 carbon atoms, and R² represents a hydrogen atom, an alkyl group having 1 to 4 carbon atoms, or an acyloxy group having 1to4 carbon atoms, and in one aspect, R¹ represents a hydrogen atom or an alkyl group having 1 to 4 carbon atoms, and R² represents a hydrogen atom, an alkyl group having 1 to 4 carbon atoms, or an acyloxy group having 1to6 carbon atoms. From the standpoint of enhancing the heat resistance, it is preferred that R¹ represents an aryl group having 6 to 10 carbon atoms, and R² represents a hydrogen atom, an alkyl group having 1 to 6 carbon atoms, an acyloxy group having 1 to 6 carbon atoms, or an aryl group having 6 to 10 carbon atoms, and in one aspect, R¹ represents a phenyl group, and R² represents a hydrogen atom.

Specific examples of the compound represented by the general formula (1) include ethylene, propylene, isobutylene, 1-hexene, styrene, vinyl acetate, methyl methacrylate, 1-butylene, 1-pentene, and 4-methyl-1-pentene.

The compound represented by the general formula (1) preferably has an e-value of 0.50 or less. The e-values used may be the literature values. Examples of the literature include J. Brandrup, E.H. Immergut, E.A. Grulke, "Polymer Handbook Fourth Edition", Vol. III, (U.S.), John Wiley & Sons Inc., 1999, p. II/309.

The e-value of the compound represented by general formula (1) is more preferably 0.40 or less, further preferably 0.10 or less, still further preferably -0.80 or less, and still more further preferably -1.00 or less. The lower limit of the e-value is not particularly limited, and may be, for example, -9.00 or more, -6.00 or more, -3.00 or more, or -2.00 or more. As described above, the lower limit values and the upper limit values described in a stepwise manner each can be independently combined. For example, in one embodiment of the present invention, the e-value of the compound represented by general formula (1) may be, for example, -9.00 to 0.50, -9.00 to 0.40, -9.00 to 0.10, -9.00 to -0.80, -9.00 to -1.00, -6.00 to 0.50, -6.00 to 0.40, -6.00 to 0.10, -6.00 to -0.80, -6.00 to -1.00, -3.00 to 0.50, -3.00 to 0.40, -3.00 to 0.10, - 3.00 to -0.80, -3.00 to -1.00, -2.00 to 0.50, -2.00 to 0.40, -2.00 to 0.10, or -2.00 to -0.80.

The e-value that is in the range is preferred from the standpoint of being capable of favorably forming an alternating copolymerization structure by alternately bonding the compound represented by the general formula (1) capable of forming the constitutional unit (b) and 1,1-dicyanoethylene capable of forming the constitutional unit (a).

In one embodiment of the present invention, the polymer (A) preferably contains an alternating copolymerization structure by alternately bonding the constitutional unit (a) and the constitutional unit (b). In the description herein, the "alternating copolymerization structure" means an alternating copolymerization structure [(b)-(a)-(b)] formed by bonding two of the constitutional units (b) to both sides of the constitutional unit (a) at the center. In an aspect in which the polymer (A) contains the alternating copolymerization structure, the content of the constitutional unit (a) that forms the alternating copolymerization structure [(b)-(a)-(b)] in the polymer (A) (in the description herein, which may be referred to as a "proportion of the alternating copolymerization structure in the polymer (A)") is preferably 80% by mol or more, more preferably 85% by mol or more, and further preferably 90% by mol or more, based on 100% by mol in total of the constitutional unit (a) contained in the polymer (A). The polymer (A) that contains the alternating copolymerization structure is preferred since the oxidation resistance can be enhanced. It is considered that the constitutional units (a) having two cyano groups, which are electron withdrawing groups, and the constitutional unit (b) exist alternately adjacent to each other, and thereby the amount of the chain structure that is liable to undergo electron oxidation is reduced, thereby enhancing the oxidation resistance as compared to the case where the alternating copolymerization structure is not contained. The proportion of the alternating copolymerization structure in the polymer (A) can be obtained by the method described in the examples described later. In the aspect described above, the content of the constitutional unit (a) that forms the alternating copolymerization structure [(b)-(a)-(b)] in the polymer (A) may be 100% by mol or less, 99.5% by mol or less, or 99% by mol or less, based on 100% by mol in total of the constitutional unit (a) contained in the polymer (A). As described above, the lower limit values and the upper limit values described in a stepwise manner each can be independently combined. For example, in one embodiment of the present invention, the content of the constitutional unit (a) that forms the alternating copolymerization structure [(b)-(a)-(b)] in the polymer (A) is preferably 80 to 100% by mol, more preferably 85 to 100% by mol, and further preferably 90 to 100% by mol, and may be, for example, 80 to 99.5% by mol, 85 to 99.5% by mol, 90 to 99.5% by mol, 80 to 99% by mol, 85 to 99% by mol, or 90 to 99% by mol, based on 100% by mol in total of the constitutional unit (a) contained in the polymer (A).

Examples of the compound having an e-value of 0.50 or less include propylene (e value: -1.69), isobutylene (e value: -1.20), vinyl acetate (e value: -0.88), styrene (e value: -0.80), ethylene (e value: 0.05), and methyl methacrylate (e value: 0.40). Therefore, the compound represented by the general formula (1) preferably contains one or more kinds selected from the group consisting of ethylene, propylene, vinyl acetate, methyl methacrylate, styrene, and isobutylene, more preferably contains one or more kinds selected from the group consisting of ethylene, propylene, vinyl acetate, styrene, and isobutylene, further preferably contains one or more kinds selected from the group consisting of propylene, vinyl acetate, styrene, and isobutylene, and still further preferably contains one or more kinds selected from the group consisting of propylene and isobutylene.

The content of the constitutional unit according to the first example in the polymer (A) is preferably 75 to 25% by mol, more preferably 65 to 35% by mol, and further preferably 55 to 45% by mol, from the standpoint of achieving the molded article, electrode, and battery that are excellent in electrochemical stability. The content of the constitutional unit (b) in the polymer (A) is preferably 75 to 25% by mol, more preferably 65 to 35% by mol, and further preferably 55 to 45% by mol, based on the total amount of 100% by mol of the constitutional units of the polymer (A), from the same standpoint. In this case, the polymer (A) is a copolymer of 1,1-dicyanoethylene forming the constitutional unit (a) and the constitutional unit according to the first example, and the polymer (A) is preferably a copolymer of 1,1-dicyanoethylene forming the constitutional unit (a) and the compound represented by the general formula (1) forming the constitutional unit (b).

The content of the constitutional unit (a) in the polymer (A) and the content of the constitutional unit (b) in the polymer (A) each may independently be the contents described above, but in the case where the selected contents are combined, the total content of the constitutional unit (a) and the constitutional unit (b) in the polymer (A) does not include a range exceeding 100% by mol based on the total amount of 100% by mol of the constitutional units of the polymer (A). Therefore, the total content of the constitutional unit (a) and the constitutional unit (b) in the polymer (A) is 100% by mol or less based on the total amount of 100% by mol of the constitutional units of the polymer (A). The same is applied to the total content of the constitutional unit (a) in the polymer (A) and the content of the first example of the additional constitutional unit in the polymer (A).

In one aspect of the polymer (A), in the case where the polymer (A) contains the constitutional unit (b), the total content of the constitutional unit (a) and the constitutional unit (b) in the polymer (A) is preferably 50 to 100% by mol, more preferably 75 to 100% by mol, further preferably 80 to 100% by mol, still further preferably 90 to 100% by mol, and still more further preferably 95 to 100% by mol, and may be 100% by mol, based on the total amount of 100% by mol of the constitutional units of polymer (A).

### [Second Example of Additional Constitutional Unit]

The polymer (A) contained in the composition may contain or may not contain a constitutional unit other than the constitutional unit derived from an olefin having two or more main chain carbon atoms or a derivative thereof. Such a constitutional unit contained in the polymer (A) allows the properties based on the constitutional unit to be achieved. The constitutional unit according to the second example may be, for example, a constitutional unit derived from one or more kind of a polymerizable monomer selected from a carboxylic acid-containing polymerizable monomer, such as a 2-cyanopentadienoic acid alkyl ester, a methylidene malonic acid dialkyl ester, and maleic anhydride, a carboxylate salt-containing polymerizable monomer, such as an acrylate salt, a maleic anhydride salt, and a methacrylate salt, butadiene, and isoprene. The content of the constitutional unit according to the second example in the polymer (A) is preferably smaller than the content of the constitutional unit (a), and is preferably smaller than the total content of the constitutional unit (a) and the constitutional unit according to the first example, from the standpoint of further facilitating the effects of the present invention. The content of the constitutional unit according to the second example in the polymer (A) is preferably 10% by mol or less, more preferably 5% by mol or less, and further preferably 1% by mol or less, based on the total amount of 100% by mol of the constitutional units in the polymer (A). The lower limit of the content of the constitutional unit according to the second example in the polymer (A) may be 0% by mol (i.e., not contained), and in the case where the polymer (A) contains the constitutional unit according to the second example, the content thereof may be 0.1% by mol or more, or 0.5% by mol or more. As described above, the lower limit values and the upper limit values described in a stepwise manner each can be independently combined. For example, in one embodiment of the present invention, the content of the constitutional unit according to the second example in the polymer (A) is preferably 0 to 10% by mol, more preferably 0 to 5% by mol, and further preferably 0 to 1% by mol, based on the total amount of 100% by mol of the constitutional units in the polymer (A). In the case where the polymer (A) contains the constitutional unit according to the second example, the content thereof may be, for example, 0.1 to 10% by mol, 0.1 to 5% by mol, 0.1 to 1% by mol, 0.5 to 10% by mol, 0.5 to 5% by mol, or 0.5 to 1% by mol, based on the total amount of 100% by mol of the constitutional units in the polymer (A).

### (Content of Polymer (A))

In the composition, the content (part by mass) of the polymer (A) is preferably the same as or smaller than the content (part by mass) of the electrode active substance from the standpoint of securing the conductivity in the battery. In one aspect of the composition, the content of the polymer (A) in the composition is preferably 50% by mass or less, more preferably 30% by mass or less, further preferably 25% by mass or less, still further preferably 20% by mass or less, still more further preferably 10% by mass or less, even further preferably 8% by mass or less, and even still further preferably 5% by mass or less, based on the total amount of 100% by mass of the composition. The content of the polymer (A) in the composition is preferably 0.01% by mass or more, more preferably 0.05% by mass or more, further preferably 0.1% by mass or more, and still further preferably 0.5% by mass or more, based on the total amount of 100% by mass of the composition, from the standpoint of securing the binding capability as a binder. As described above, the lower limit values and the upper limit values described in a stepwise manner each can be independently combined. For example, in one embodiment of the present invention, the content of the polymer (A) in the composition is preferably 0.01 to 50% by mass, more preferably 0.05 to 30% by mass, further preferably 0.1 to 10% by mass, and still further preferably 0.5 to 5% by mass, based on the total amount of 100% by mass of the composition. For example, in one embodiment of the present invention, the content of the polymer (A) in the composition may be 0.01 to 30% by mass, 0.01 to 25% by mass, 0.01 to 20% by mass, 0.01 to 10% by mass, 0.01 to 8% by mass, 0.01 to 5% by mass, 0.05 to 50% by mass, 0.05 to 25% by mass, 0.05 to 20% by mass, 0.05 to 10% by mass, 0.05 to 8% by mass, 0.05 to 5% by mass, 0.1 to 50% by mass, 0.1 to 30% by mass, 0.1 to 25% by mass, 0.1 to 20% by mass, 0.1 to 8% by mass, 0.1 to 5% by mass, 0.5 to 50% by mass, 0.5 to 30% by mass, 0.5 to 25% by mass, 0.5 to 20% by mass, 0.5 to 10% by mass, or 0.5 to 8% by mass, based on the total amount of 100% by mass of the composition.

### <Electrode Active Substance>

The electrode active substance contained in the composition according to the present embodiment may be either a positive electrode active substance or a negative electrode active substance. The electrode active substance used may be a commercially available product. In the case where the electrode active substance is a positive electrode active substance, any material that is capable of performing reversible insertion and extraction of an alkali metal ion, such as a lithium ion, can be used with no particular limitation, and can be appropriately selected depending on the purpose. Examples of the electrode active substance include lithium nickel cobalt manganese oxide (abbreviation: NCM) represented by LiNiₓCo_{y}Mn_{z}O₂ (x + y + z = 1, x > 0, 0 < y < 1, 0 < z < 1), lithium nickel cobalt aluminum oxide (abbreviation: NCA) represented by LiNiₓCo_{y}Al_{z}O₂ (x + y + z = 1, x > 0, z > 0), lithium manganese oxide represented by LiMn₂O₄, lithium cobalt oxide (abbreviation: LCO) represented by LiCoO₂, lithium nickel manganese oxide (abbreviation: LNMO) represented by LiNi_{0.5}Mn_{1.5}O₄, and a lithium phosphate based material represented by LiₓMe_{y}(PO₄), (0.5 ≤ x ≤ 4, Me = transition metal, 0.5 ≤ y ≤ 2.5, 0.5 ≤ z ≤ 3.5).

Nickel cobalt manganese oxide represented by LiNiₓCo_{y}Mn_{z}O₂ (x + y + z = 1, x > 0, 0 < y < 1, 0 < z < 1) is not particularly limited, and can be appropriately selected depending on the purpose, and examples thereof include LiNi_{1/3}Co_{1/3}Mn_{1/3}O₂ (abbreviation: NCM111), LiNi_{0.3}Co_{0.2}Mn_{0.5}O₂, LiNi_{0.8}Co_{0.1}Mn_{0.1}O₂, LiNi_{0.5}Co_{0.2}Mn_{0.3}O₂, LiNi_{0.5}Co_{0.3}Mn_{0.2}O₂, LiNi_{0.6}Co_{0.1}Mn_{0.3}O₂, and LiNi_{0.6}Co_{0.2}Mn_{0.2}O₂.

The lithium phosphate based material having a basic skeleton represented by LiₓMe_{y}(PO₄)_{z} (0.5 ≤ x ≤ 4, Me = transition metal, 0.5 ≤ y ≤ 2.5, 0.5 ≤ z ≤ 3.5) is not particularly limited, and can be appropriately selected depending on the purpose, and examples thereof include lithium vanadium phosphate (Li₃V₂(PO₄)₃), olivine-type lithium iron phosphate (LiFePO₄), olivine-type lithium manganese phosphate (LiMnPO₄), olivine-type lithium cobalt phosphate (LiCoPO₄), olivine-type lithium nickel phosphate (LiNiPO₄), olivine-type lithium vanadium phosphate (LiVOPO₄), and similar compounds having these basic skeletons with a different element doped therein.

Examples of NCA include LiNi_{0.8}Co_{0.15}Al_{0.05}O₂.

In one embodiment of the present invention, the electrode active substance is preferably NCM111.

### (Content of Electrode Active Substance)

The content of the electrode active substance in the composition is preferably 50% by mass or more, more preferably 70% by mass or more, further preferably 75% by mass or more, still further preferably 80% by mass or more, still more further preferably 90% by mass or more, even further preferably 92% by mass or more, and even still further preferably 95% by mass or more, based on the total amount of 100% by mass of the composition, from the standpoint of enhancing the capacity of the battery. The upper limit of the content of the electrode active substance in the composition is naturally determined depending on the contents of the other components. In one embodiment of the present invention, the content of the electrode active substance in the composition may be, for example, 99.99% by mass, 99.95% by mass, 99.9% by mass, or 99.5% by mass, based on the total amount of 100% by mass of the composition. As described above, the lower limit values and the upper limit values described in a stepwise manner each can be independently combined. For example, in one embodiment of the present invention, the content of the electrode active substance in the composition may be, for example, 50 to 99.99% by mass, 70 to 99.99% by mass, 75 to 99.99% by mass, 80 to 99.99% by mass, 90 to 99.99% by mass, 92 to 99.99% by mass, 95 to 99.99% by mass, 50 to 99.95% by mass, 70 to 99.95% by mass, 75 to 99.95% by mass, 80 to 99.95% by mass, 90 to 99.95% by mass, 92 to 99.95% by mass, 95 to 99.95% by mass, 50 to 99.9% by mass, 70 to 99.9% by mass, 75 to 99.9% by mass, 80 to 99.9% by mass, 90 to 99.9% by mass, 92 to 99.9% by mass, 95 to 99.9% by mass, 50 to 99.5% by mass, 70 to 99.5% by mass, 75 to 99.5% by mass, 80 to 99.5% by mass, 90 to 99.5% by mass, 92 to 99.5% by mass, or 95 to 99.5% by mass, based on the total amount of 100% by mass of the composition.

In one embodiment of the present invention, the contents of the polymer (A) and the electrode active substance each may independently be the contents described above, but in the case where the selected contents are combined, the total content of the polymer (A) and the electrode active substance does not include a range exceeding 100% by mass based on the total amount of 100% by mass of the composition. Therefore, the total content of the polymer (A) and the electrode active substance is 100% by mass or less based on the total amount of 100% by mass of the composition. As described above, the "total amount of 100% by mass of the composition" does not include the content of the solvent described later.

### <Conductive Additive>

The composition may further contain a conductive additive. Examples of the conductive additive include acetylene black and carbon black. In the case where the composition contains a conductive additive, in one aspect of the conductive additive, the conductive additive is preferably carbon black.

In the composition, the content of the conductive additive is preferably 0.01 part by mass or more, more preferably 0.05 part by mass or more, further preferably 0.1 part by mass or more, and still further preferably 0.5 part by mass or more, per 100 parts by mass of the electrode active substance, from the standpoint of enhancing the conductivity in the battery. The upper limit of the content of the conductive additive is not particularly limited, and for example, may be 10 parts by mass or less, 8 parts by mass or less, or 6 parts by mass or less, per 100 parts by mass of the electrode active substance. As described above, the lower limit values and the upper limit values described in a stepwise manner each can be independently combined. For example, in one embodiment of the present invention, the content of the conductive additive in the composition may be, for example, 0.01 to 10 parts by mass, 0.05 to 10 parts by mass, 0.1 to 10 parts by mass, 0.5 to 10 parts by mass, 0.01 to 8 parts by mass, 0.05 to 8 parts by mass, 0.1 to 8 parts by mass, 0.5 to 8 parts by mass, 0.01 to 6 parts by mass, 0.05 to 6 parts by mass, 0.1 to 6 parts by mass, or 0.5 to 6 parts by mass, per 100 parts by mass of the electrode active substance.

In one embodiment of the present invention, in the case where the composition contains the conductive additive, the contents of the polymer (A), the electrode active substance, and the conductive additive each may independently be the contents described above, but in the case where the selected contents are combined, the total content of the polymer (A), the electrode active substance, and the conductive additive does not include a range exceeding 100% by mass based on the total amount of 100% by mass of the composition. Therefore, the total content of the polymer (A), the electrode active substance, and the conductive additive is 100% by mass or less based on the total amount of 100% by mass of the composition.

In one embodiment of the present invention, in the case where the composition contains the conductive additive, the total content of the polymer (A), the electrode active substance, and the conductive additive is preferably 51 to 100% by mass, more preferably 70 to 100% by mass, further preferably 80 to 100% by mass, still further preferably 90 to 100% by mass, still more further preferably 95 to 100% by mass, and even further preferably 98 to 100% by mass, and may be 100% by mass, based on the total amount of 100% by mass of the composition. As described above, the "total amount of 100% by mass of the composition" does not include the content of the solvent described later.

### <Solvent>

The composition may contain a solvent (dispersion medium). The solvent contained in the composition can enhance the dispersibility of the polymer (A) and the electrode active substance. The solvent used may be optionally selected, and is preferably a nonaqueous solvent. The solvent is preferably a solvent having a large solubility of the polymer (A). In the case where the composition is applied to an electrode or a battery, the solvent is not particularly limited, and examples thereof include an amide compound, such as N-methyl-2-pyrrolidone, N,N-dimethylacetamide, and N,N-dimethylformamide; a urea compound, such as N,N-dimethylethyleneurea, N,N-dimethylpropyleneurea, and tetramethylurea; a lactone compound, such as γ-butyrolactone and γ-caprolactone; a carbonate compound, such as propylene carbonate; a ketone compound, such as acetone, methyl ethyl ketone, methyl isobutyl ketone, and cyclohexanone; an ester compound, such as methyl acetate, ethyl acetate, n-butyl acetate, butyl cellosolve acetate, butyl carbitol acetate, ethyl cellosolve acetate, and ethyl carbitol acetate; a glyme compound, such as diglyme, triglyme, and tetraglyme; a hydrocarbon compound, such as toluene, xylene, and cyclohexane; a sulfoxide compound, such as dimethylsulfoxide; a sulfone compound, such as sulfolane; an alcohol compound, such as methanol, isopropanol and n-butanol; a nitrile compound, such as acetonitrile; and water. Among the solvents, an amide compound, a urea compound, a lactone compound, and a mixed solvent containing at least one kind selected therefrom are preferred, in which N-methyl-2-pyrrolidone or a mixed solvent containing N-methyl-2-pyrrolidone are more preferred, in view of the solubility to the polymer (A) contained in the composition or the like. The solvents each may be used alone, or two or more kinds thereof may be used in combination. In the case where the composition contains the solvent, the content of the solvent in the composition may be optionally determined, and is preferably 1 to 400 parts by mass, more preferably 5 to 100 parts by mass, further preferably 10 to 70 parts by mass, still further preferably 20 to 60 parts by mass, and still more further preferably 30 to 50 parts by mass, per 100 parts by mass in total of the components in the composition except for the solvent, from the standpoint of facilitating the achievement of the prescribed coatability.

### <Additional Component>

Examples of the additional component include an additional binder, an electrolyte solution, a thickener, a pigment, an organic filler, an inorganic filler, an anti-aging agent, a plasticizer, a flame retardant, a stabilizer, an antioxidant, rubber, a defoaming agent, an antisettling agent, and a leveling agent. The additional component can be used in a content that does not excessively impair the effects of the present invention.

Examples of the additional binder include polyacrylonitrile (PAN) and a copolymer thereof, styrene-butadiene rubber (SBR), polypropylene (PP), polyethylene (PE), and carboxymethyl cellulose (CMC). In the case where the composition according to the present embodiment contains the additional binder, the content (part by mass) thereof is preferably smaller than the content (part by mass) of the polymer (A) from the standpoint of facilitating the enhancement of the effects of the present invention.

In one embodiment of the present invention, it is preferred that the composition substantially does not contain a fluorine-containing polymer, such as polytetrafluoroethylene (PTFE), polyvinylidene fluoride (PVDF), and fluorine based rubber. The expression "substantially does not contain" herein specifically means that the content of the fluorine-containing polymer is 0 to 1% by mass, preferably 0 to 0.5% by mass, more preferably 0 to 0.1% by mass, further preferably 0 to 0.05% by mass, still further preferably 0 to 0.01% by mass, and still more further preferably 0% by mass (i.e., not contained), based on the total amount of 100% by mass of the composition.

In one embodiment of the present invention, similarly, it is preferred that the composition substantially does not contain a halogen-containing polymer. The expression "substantially does not contain" herein specifically means that the content of the halogen-containing polymer is 0 to 1% by mass, preferably 0 to 0.5% by mass, more preferably 0 to 0.1% by mass, further preferably 0 to 0.05% by mass, still further preferably 0 to 0.01% by mass, and still more further preferably 0% by mass (i.e., not contained), based on the total amount of 100% by mass of the composition.

### <Production Method of Composition>

The production method of the composition is not particularly limited, and the composition can be produced, for example, by a production method including a mixing step of mixing the polymer (A) and the electrode active substance, and also the conductive additive, the solvent, and the additional component that are used depending on necessity. The method for mixing the components is not particularly limited, and the components can be mixed by a known method.

### <Characteristics of Polymer (A) and Composition>

### (Swellability of Polymer (A))

The polymer (A) contained in the composition tends to have characteristics of excellent swellability in an electrolyte solution. In the case where the composition contains an electrolyte solution, the polymer (A) tends to have characteristics of excellent swellability in the electrolyte solution. In one aspect of the polymer (A), the polymer (A) contained in the composition has swellability that is comparable to PVDF. The swellability can be evaluated, for example, by the method described in the section of the examples described later. Due to the excellent swellability of the polymer (A), the composition according to the present embodiment is useful as a binder composition for batteries, and is more useful as a binder composition for secondary batteries. The swellability in an electrolyte solution can be evaluated by the mass degree of swelling (% by mass) that is measured by the method described in the section of the examples, and is preferably 800% by mass or less, more preferably 500% by mass or less, further preferably 300% by mass or less, still further preferably 250% by mass or less, and still more further preferably 200% by mass or less. The preferred range of the lower limit value thereof is 101% by mass or more. The mass degree of swelling that is in the range is preferred since the expansion and contraction of the battery due to charging and discharging can be reduced, thereby enhancing the quality of the battery.

### (Oxidation Resistance of Polymer (A))

The polymer (A) contained in the composition tends to have characteristics of excellent oxidation resistance. The oxidation resistance of the polymer (A) can be evaluated, for example, by the voltage value that is measured by the method described in the section of the examples described later. In the case where the polymer (A) is applied to a positive electrode of a battery, the polymer (A) preferably has a voltage value at which the cumulative value of the current value calculated by a cyclic voltammetry measurement reaches 0.05 µA/cm² of 4.0 V or more, more preferably 4.2 V or more, further preferably 4.4 V or more, and still further preferably 4.7 V or more. The upper limit value of the voltage value is not particularly limited, as long as exerting the effects of the present invention, and may be, for example, 5.5 V. For example, in one embodiment of the present invention, the voltage value of the polymer (A) is preferably 4.0 to 5.5 V, more preferably 4.2 to 5.5 V, further preferably 4.4 to 5.5 V, and still further preferably 4.7 to 5.5 V.

Due to the excellent oxidation resistance of the polymer (A), the composition is useful in an application exposed to a severe environment, such as an electrolyte solution, for example, as a binder composition for batteries, and is more useful as a binder composition for secondary batteries.

Due to the excellent oxidation resistance of the polymer (A), the composition containing the polymer (A) tends to have characteristics of excellent electrochemical stability in the form of a molded article. The electrochemical stability can be evaluated, for example, by the method described in the section of the examples described later. Due to the ability of providing a molded article excellent in electrochemical stability, the composition is useful in an application requiring electrification, for example, as an electrode and a battery.

### (Cycle Characteristics of Composition)

The composition tends to have excellent cycle characteristics in the form of a molded article. The cycle characteristics can be evaluated, for example, by the method described in the section of the examples described later. Due to the ability of providing a molded article excellent in cycle characteristics, the composition is useful in an application requiring electrification, for example, as an electrode and a battery.

### <Application of Composition>

The composition has the characteristics described above, and therefore, for example, is useful as a binder composition for secondary batteries, and also useful as an electrode and a battery. Examples of the electrode include a positive electrode and a negative electrode. In one embodiment of the present invention, the composition can be used as a binder composition for a positive electrode, an electrolyte retaining material of a positive electrode for example, and is preferably used as a binder composition for a positive electrode. Examples of the battery include a secondary battery. In one embodiment of the present invention, the composition is more preferably a binder composition for secondary batteries.

### [Binder Composition for Secondary Batteries]

The binder composition for secondary batteries according to one embodiment of the present invention contains a polymer (A) containing a constitutional unit (a) derived from 1,1-dicyanoethylene, and an electrode active substance. The polymer (A) containing a constitutional unit (a) derived from 1,1-dicyanoethylene contained in the binder composition for secondary batteries is the same as the polymer (A) described above in the section of the "electrode active substance-containing composition", and the preferred aspects thereof are also the same. The electrode active substance contained in the binder composition for secondary batteries is the same as the electrode active substance described above in the section of the "electrode active substance-containing composition", and the preferred aspects thereof are also the same. The binder composition for secondary batteries may be the composition according to one embodiment of the present invention described above in the section of the "composition". The binder composition for secondary batteries may further contain an optional component, or may not contain an optional component.

### [Molded Article]

The molded article according to one embodiment of the present invention is a molded article that is formed with the composition according to one embodiment of the present invention described above in the section of the "composition" or the binder composition for secondary batteries according to one embodiment of the present invention described above. Therefore, the molded article contains at least the polymer (A) containing the constitutional unit (a) derived from 1,1-dicyanoethylene, and the electrode active substance. The molded article may further contain an optional component, or may not contain an optional component.

### [Electrode]

The electrode according to one embodiment of the present invention is an electrode including the molded article according to one embodiment of the present invention described above. The electrode may be a positive electrode or may be a negative electrode. The electrode is preferably a positive electrode from the standpoint of securing the swellability in an electrolyte solution.

In the case where the electrode is a positive electrode, the electrode generally includes a collector for a positive electrode, and a positive electrode active substance layer in contact with the collector. The collector is constituted by a material having a high electroconductivity. In one aspect of the collector, the material for the collector is aluminum or an aluminum alloy. The shape of the collector is not particularly limited, and is preferably in the form of sheet, and more preferably a foil having a thickness of 50 µm or less.

In one aspect of the collector, the thickness of the collector is not particularly limited, and is preferably 5 to 50 µm, and more preferably 10 to 40 µm.

In one aspect of the positive electrode active substance layer, the thickness of the positive electrode active substance layer is not particularly limited, and is preferably 20 to 500 µm, and more preferably 50 to 400 µm.

In one aspect of the electrode, the positive electrode active substance layer is a layer that includes the molded article according to one embodiment of the present invention described above, or is a layer that includes only the molded article according to one embodiment of the present invention described above. The polymer (A), which is contained in the composition or the binder composition for secondary batteries capable of forming the molded article, functions as a binder as described above, and thereby is fixed to the surface of the collector together with the electrode active substance, so as to form the positive electrode active substance layer. The positive electrode active substance layer may also be, for example, a positive electrode mixture layer.

### <Production Method of Electrode>

The electrode can be produced by a known method. For example, the electrode can be produced by the following procedure. The composition or the binder composition for secondary batteries described in the embodiment above is formed into a slurry state with a solvent, and coated or applied to the surface of the collector to form a coating film. It is preferred that the coating film is then dried. The coating film is pressed depending on necessity to form the electrode active substance layer having a prescribed thickness or a prescribed density. The electrode including the collector and the electrode active substance layer formed on the surface of the collector is produced in this manner.

### [Battery]

The battery according to one embodiment of the present invention is a battery including the molded article according to one embodiment of the present invention described above. The polymer (A) contained in the molded article according to one embodiment of the present invention has swellability in an electrolyte solution, and therefore the battery according to the present embodiment is preferably a secondary battery.

The battery generally includes a positive electrode, a separator, and a negative electrode. In addition, the battery generally includes a housing and an electrolyte solution (which is a solid electrolyte in the case where the battery is an all-solid-state battery) charged in the housing. The structure of the positive electrode is as described above, and it is preferred that the positive electrode active substance layer is a layer that includes the molded article according to one embodiment of the present invention, or is a layer that includes only the molded article according to one embodiment of the present invention.

The negative electrode has the same structure as the positive electrode, and generally includes a collector for a negative electrode, and a negative electrode active substance layer in contact with the collector. The negative electrode active substance layer may be a layer that includes the molded article according to one embodiment of the present invention, or is a layer that includes only the molded article according to one embodiment of the present invention. In one aspect of the battery, the negative electrode active substance layer may not be a layer that includes the molded article according to one embodiment of the present invention, or may not be a layer that includes only the molded article according to one embodiment of the present invention.

The separator is disposed between the positive electrode and the negative electrode. The separator used may be a commercially available product.

### <Electrolyte Solution>

The electrolyte solution generally contains an electrolyte and a solvent dissolving the electrolyte. The electrolyte solution used may be an optional electrolyte solution that is used for batteries.

The electrolyte used may be an optional one. Examples of the electrolyte include an alkali salt, in which a lithium salt is preferred. In one aspect of the electrolyte solution, examples of the electrolyte include lithium hexafluorophosphate (LiPF₆).

The solvent of the electrolyte solution may be an optional one. In one aspect of the electrolyte solution, the solvent is, for example, a nonaqueous solvent. Examples of the nonaqueous solvent include ethylene carbonate (EC), propylene carbonate (PC), dimethyl carbonate (DMC), ethyl methyl carbonate (EMC), diethyl carbonate (DEC), γ-butyrolactone, acetonitrile, methyl propionate, ethyl propionate, tetrahydrofuran (THF), 2-methyltetrahydrofuran, dimethoxyethane, and diethoxyethane. Two or more kinds of the solvents may be used in combination as a mixed solvent.

In one aspect of the electrolyte solution, the solvent used in the electrolyte solution is one kind of a solvent selected from the group consisting of propylene carbonate (PC); ethyl methyl carbonate (EMC); dimethyl carbonate (DMC); ethylene carbonate (EC); dimethyl carbonate (DMC); a mixed solvent of ethylene carbonate (EC) and dimethyl carbonate (DMC); a mixed solvent of ethylene carbonate (EC), ethyl methyl carbonate (EMC), and dimethyl carbonate (DMC); a mixed solvent of propylene carbonate (PC), ethyl methyl carbonate (EMC), dimethyl carbonate (DMC), ethylene carbonate (EC), and dimethyl carbonate (DMC); and a mixed solvent of ethylene carbonate (EC), ethyl methyl carbonate (EMC), and dimethyl carbonate (DMC). A carbonate based solvent is preferred, and at least one kind of a solvent selected from the group consisting of propylene carbonate (PC), ethyl methyl carbonate (EMC), dimethyl carbonate (DMC), ethylene carbonate (EC), and dimethyl carbonate (DMC) is more preferred, from the standpoint of facilitating the control of the swellability of the polymer contained in the composition of the present embodiment.

The electrolyte solution may further contain an additive as an additional component, or may not contain an additive. Examples of the additive include vinylene carbonate (VC), propane sultone (PS), fluoroethylene carbonate (FEC), a monofluorophosphate salt, a difluorophosphate salt, lithium hexafluorophosphate (LiPF₆), a fluorosulfonate salt, lithium bisborate, a nitrate salt, an acetate salt, and a propionate salt. One kind of the additive may be contained alone, or two or more kinds thereof may be contained. The additive may be used in any amount unless the effects of the present invention are excessively impaired.

### <Production Method of Battery>

The battery can be produced by a known method. For example, the battery can be produced by the following procedure. First, a positive electrode, a negative electrode, and a separator are disposed in a housing. Subsequently, an electrolyte solution is charged in the housing, which is then sealed depending on necessity. The battery is produced in this manner.

### Examples

The present invention is described in detail with reference to examples below, but the present invention is not limited to the examples.

### [Components]

The materials and the components used for preparing the compositions according to Examples and Reference Examples are as follows.

### <Polymer (A) containing Constitutional Unit (a) derived from 1,1-Dicyanoethylene>

The following materials were used for producing the polymer (A) to be blended in the compositions according to Examples and Reference Examples.

1,1-Dicyanoethylene: 1,1-dicyanoethylene produced according to Production Example 1 below (purity: 99%)

### (Production Example 1: Production of 1,1-Dicyanoethylene)

1,1-Dicyanoethylene was produced in the following manner.

1,1,3,3-Tetracyanopropane was synthesized from malononitrile at a yield of 73% by the production method described in J. Am. Chem. Soc., (U.S.), 1989, Vol. 111, No. 25, p. 9078-9081. The resulting 1,1,3,3-tetracyanopropane in the form of crystals and diphosphorus pentoxide were mixed and thermally decomposed at 180°C to provide a crude product of 1,1-dicyanoethylene (yield: 60%).

The crude product was purified through distillation under reduced pressure (480 Pa) to provide 1,1-dicyanoethylene having a purity of 99%.
Isobutylene: available from Tokyo Kasei Kogyo Co., Ltd., e-value: -1.20
Styrene: available from Fujifilm Wako Pure Chemical Corporation, e-value: -0.80
Vinyl acetate: available from Fujifilm Wako Pure Chemical Corporation, e-value: - 0.88
Propylene: available from Tokyo Kasei Kogyo Co., Ltd., e-value: -1.69

### <Solvent>

Ethyl acetate: available from Fujifilm Wako Pure Chemical Corporation
Toluene: available from Fujifilm Wako Pure Chemical Corporation

### <Polymerization Initiator>

2,2'-Azobis(4-methoxy-2,4-dimethylvaleronitrile): available from Fujifilm Wako Pure Chemical Corporation
Bis(1-oxododecyl) peroxide (dilauroyl peroxide): "Luperox (registered trademark) LP", a product name (available from Arkema S.A.)

The following materials were used for evaluation.

### <Electrode Active Substance>

LiNi_{1/3}Co_{1/3}Mn_{1/3}O₂ (hereinafter referred to as "NCM111"): available from Merck Corporation

### <Conductive Additive>

Carbon black: "Super P (registered trademark)", a product name (available from Imerys Graphite & Carbon Ltd.)

### <Solvent>

N-Methyl-2-pyrrolidone (abbreviation: NMP): available from Tokyo Kasei Kogyo Co., Ltd.

### <Electrolyte solution>

Electrolyte solution A: an electrolyte solution obtained by adding LiPF₆ (available from Tokyo Kasei Kogyo Co., Ltd.) to ethyl methyl carbonate (abbreviation: EMC, available from Tokyo Kasei Kogyo Co., Ltd.) to make a concentration of 1.0 M
Electrolyte solution B: an electrolyte solution obtained by adding LiPF₆ (available from Tokyo Kasei Kogyo Co., Ltd.) to a mixture of EC/EMC/DMC = 1/1/1 (volume ratio) to make a concentration of 1.0 M
"EC" is an abbreviation of ethylene carbonate, and EC available from Tokyo Kasei Kogyo Co., Ltd. was used. "DMC" is an abbreviation of dimethyl carbonate, and DMC available from Tokyo Kasei Kogyo Co., Ltd. was used. The same is applied to the following.
Electrolyte solution C: an electrolyte solution obtained by adding LiPF₆ (available from Tokyo Kasei Kogyo Co., Ltd.) to DMC to make a concentration of 1.0 M
Electrolyte solution D: an electrolyte solution obtained by adding LiPF₆ (available from Tokyo Kasei Kogyo Co., Ltd.) to a mixture of EC/DMC = 1/1 (volume ratio) to make a concentration of 1.0 M

### <Polymer used in Reference Example 2>

Polyvinylidene fluoride (abbreviation: PVDF): "Kureha KF Polymer (registered trademark) W#1700" (available from Kureha Corporation)

### [Evaluation Method]

The compositions obtained in Examples and Reference Examples as samples were evaluated in the following manner.

### <1. Content of Constitutional Unit (a)>

The polymers obtained in Examples and Reference Example 1 in the form of powder as samples each were measured for ¹H-NMR with a nuclear magnetic resonator (NMR) to provide a ¹H-NMR spectrum. In the resulting ¹H-NMR spectrum, the ratio of the signal derived from the methylene group between the constitutional unit (a) and the constitutional unit (b) appearing around 1.5 ppm to 3.0 ppm and the signal derived from the functional group of the constitutional unit (b) was measured to provide the content (% by mol) of the constitutional unit (a). The content (% by mol) of the constitutional unit (a) is shown in Table 1.

### (¹H-NMR Measurement Condition)

Apparatus: "JNM-ECX400", available from JEOL, Ltd.
Measurement solvent: dimethylsulfoxide-d6
Sample concentration: 25 mg/mL
Measurement temperature: 65°C
Chemical shift standard: tetramethylsilane
Cumulated number: 32

### <2. Calculation of Proportion of Alternating Copolymerization Structure>

The polymers obtained in Examples and Reference Example 1 in the form of powder as samples each were measured for ¹³C-NMR under the following condition with a nuclear magnetic resonator (NMR) to provide a ¹³C-NMR spectrum.

### (¹³C-NMR Measurement Condition)

Apparatus: "JNM-ECX400", available from JEOL, Ltd.
Measurement solvent: dimethylsulfoxide-d6
Sample concentration: 25 mg/mL
Measurement temperature: 65°C
Measurement method: proton decoupling method
Pulse width: 45 degrees
Repetition time of pulse: 10 seconds
Chemical shift standard: tetramethylsilane
Cumulated number: 14,000

The proportion (% by mol) of the alternating copolymerization structure in the polymer (A) obtained in each of Examples and Reference Example 1 was calculated in the following manner.

Specifically, for the polymer of 1,1-dicyanoethylene and vinyl acetate used in Example 3-1 and Example 3-2, and the polymer of 1,1-dicyanoethylene and styrene used in Example 2, the ¹³C-NMR spectrum thereof was obtained as described above. Subsequently, in consideration of the structure including three of the constitutional unit (a) derived from 1,1-dicyanoethylene and the constitutional unit (b) derived from the compound represented by the general formula (1) connected in sequence in which the structure includes the constitutional unit (a) is at the center, the proportion of the alternating copolymerization structure (% by mol) in the polymer (A) was obtained by calculating the proportion of the area of the peak of the alternating copolymerization structure "(b)-(a)-(b)" formed by bonding two of the constitutional units (b) to both sides of the constitutional unit (a) at the center, with respect to the area of the peaks of all the structures that include the constitutional unit (a) at the center, i.e., the first non-alternating copolymerization structure "(a)-(a)-(a)", the alternating copolymerization structure "(b)-(a)-(b)", the second non-alternating copolymerization structure "(b)-(a)-(a)", and the third non-alternating copolymerization structure "(a)-(a)-(b)". The "proportion (% by mol) of the alternating copolymerization structure" herein means the content (% by mol) of the constitutional unit (a) that forms the alternating copolymerization structure "(b)-(a)-(b)" based on 100% by mol in total of the constitutional unit (a) contained in the polymer (A). For determining the constitutional unit (a) and the constitutional unit (b) and for determining the alternating copolymerization structure and the non-alternating copolymerization structures, the chemical shift values in ¹³C-NMR described in J. Brandrup, E.H. Immergut, E.A. Grulke, "Polymer Handbook Fourth Edition", Vol. III, (U.S.), John Wiley & Sons Inc., 1999, p. II/309, and Macromolecules, (U.S.), 1985, Vol. 18, No. 10, p. 1850-1855 were used.

For the copolymer of 1,1-dicyanoethylene and isobutylene used in Reference Example 1, Example 1-1, and Example 1-2, the areas of the peak around 115 ppm corresponding to the third non-alternating copolymerization structure "(a)-(a)-(b)" and the peak around 117 ppm corresponding to the alternating copolymerization structure "(b)-(a)-(b)" were calculated, from which the proportion of the alternating copolymerization structure was obtained in the same manner as above. The peak around 113 ppm corresponding to "(a)-(a)-(a)" was below the detection limit.

For the copolymer of 1,1-dicyanoethylene and propylene used in Example 5-1 and Example 5-2, the areas of the peak around 114 ppm corresponding to the third non-alternating copolymerization structure "(a)-(a)-(b)" and the peak around 116 ppm corresponding to the alternating copolymerization structure "(b)-(a)-(b)" were calculated, from which the proportion of the alternating copolymerization structure was obtained in the same manner as above. The peak around 113 ppm corresponding to "(a)-(a)-(a)" was below the detection limit.

The proportions (% by mol) of the alternating copolymerization structure are shown in Table 1.

It was confirmed that the higher the proportions (% by mol) of the alternating copolymerization structure was, the more likely the oxidation resistance of the polymer evaluated in the section <5. Evaluation of Electrochemical Stability> described later was better.

### <3. Measurement of Weight Average Molecular Weight (Mw)>

The weight average molecular weight (Mw) of each of the polymers (A) used in Examples and Reference Examples was measured by GPC (gel permeation chromatography) in terms of standard polystyrene conversion. The measurement apparatus and condition were as follows.
Apparatus: "HLC (registered trademark) 8320GPC EcoSEC (registered trademark)", available from Tosoh Corporation
Separation column: "TSKgel (registered trademark) GMH_{XL} (average particle diameter: 9 µm, inner diameter of column: 7.8 mm, column length: 30 cm), available from Tosoh Corporation
Eluent: dimethylformamide (DMF), 0.01 M LiBr
Flow rate of eluent: 0.7 mL/min
Sample concentration: 0.5 mg/1 mL
Column temperature: 40°C

### <4. Evaluation of Swellability>

The polymers or the mixtures of the polymers (hereinafter referred simply to as a "polymer" in this evaluation item) used in Examples and Reference Examples was dried with an air blow dryer at 100°C for 24 hours.

0.025 g of the polymer (designated as the mass S0 (g) before immersion) was immersed in the electrolyte solution shown in Table 1 or Table 2 in such a manner that the entire surface of the polymer was brought into contact with the electrolyte solution, and swollen therewith in an environment of a temperature of 25°C over 10 hours.

Thereafter, the swollen polymer was taken out, from which the excessive electrolyte solution was removed by pressing paper towel onto the surface of the polymer, and then the mass S1 (g) thereof was measured. The mass degree of swelling S (% by mass) was calculated according to the following expression. $S = \left\{\left(S1\right)/\left(S0\right)\right\} \times 100$

The mass degrees of swelling S (% by mass) are shown in Table 1 or Table 2.

In the case where the mass degree of swelling S (% by mass) was 101% by mass or more and 800% by mass or less, it was evaluated that the polymer had practical swellability as a battery or an electrode for batteries.

### <5. Evaluation of Electrochemical Stability>

A CV measurement was performed in the following manner, and the electrochemical stability was evaluated from the result obtained.

### (5-1. Production of First Three-Electrode Cell)

### (5-1-1. Production of Electrodes)

A positive electrode as an electrode was produced in the following manner by using the composition obtained in each of Examples and Comparative Examples and a collector.

The composition obtained in each of Examples and Comparative Examples was applied to an aluminum foil (size: 9 cm in width, 15 cm in length, 20 µm in thickness) used as the collector to a thickness of 180 µm with an applicator. The solvent was removed by drying at 80°C under reduced pressure of 1 kPa for 0.5 hour, and a positive electrode active substance layer as an electrode active substance layer was formed on the collector. A laminate of the collector and the positive electrode active substance layer was obtained in this manner. The laminate was pressed with a roll press at a load of 2.3 ton, so as to produce a positive electrode. In the resulting positive electrode, the thickness of the positive electrode active substance layer was 50 µm.

In the case where the compositions obtained in Examples were used, the supported amount of the electrode active substance in the positive electrode active substance layer was 15 mg/cm². In the case where the composition obtained in Reference Example 1 was used, the supported amount of the electrode active substance in the positive electrode active substance layer was 0 mg/cm².

### (5-1-2. Production of First Three-Electrode Cell)

The positive electrode produced in the section 5-1-1 was dried at 140°C under reduced pressure of 1 kPa for 3 hours, and then transferred to a glove box (available from Miwa Manufacturing Co., Ltd.) having an argon atmosphere.

Subsequently, a three-electrode cell was produced in the glove box in the following manner.

The positive electrode produced in the section 4-1-1 was used as a working electrode. A Li wire (diameter: 2 mm, length: 6 mm) was used as a reference electrode. A metallic lithium foil (thickness: 0.2 mm, diameter: 16 mm) was used as a counter electrode. A polypropylene separator (Celgard (registered trademark) #2400, available from Polypore International, LLC) was used as a separator. The separator was disposed between the counter electrode and the working electrode in the cell. Each of the electrolyte solutions shown in Table 1 or Table 2 was charged as an electrolyte solution in the cell. A three-electrode cell was produced in this manner. The three-electrode cell may also be referred to as a "first three-electrode cell" in the description herein.

### (5-2. Production of Second Three-Electrode Cell)

### (5-2-1. Production of Molded Article with Foil)

The polymer or the mixture of polymers used in each of Examples and Reference Examples was dissolved in NMP to a solid concentration (i.e., a concentration of the polymer or the mixture of polymers) of 10% by mass. The resulting polymer-containing composition was applied to an aluminum foil (size: 9 cm in width, 15 cm in length, 20 µm in thickness) used as the collector with an applicator. NMP was removed by drying at 80°C under reduced pressure of 1 kPa for 0.5 hour. A molded article with a foil in the form of film having a layer formed only of the polymer having a thickness of 10 µm was obtained in this manner.

### (5-2-2. Production of Second Three-Electrode Cell)

A three-electrode cell was produced in the same manner as in the section 5-1-2 except that the molded article with a foil produced in the section 5-2-1 was used as a working electrode instead of the positive electrode produced in the section 5-1-1. The three-electrode cell may also be referred to as a "second three-electrode cell" in the description herein.

### (5-3. Cyclic Voltammetry (CV) Measurement)

A redox current measurement was performed by using the second three-electrode cell produced in the section 5-2 with a potentiostat-galvanostat ("VMP3", available from Bio-Logic Science Instruments Ltd.). A redox potential measurement was performed by using the second three-electrode cell.

As the measurement condition, a sweep rate of 0.1 mV/s and a sweep range of 1 to 5 V were set. As a result of the measurement, a cyclic voltammogram of the current value in scanning in each cycle was obtained.

### (5-4. Evaluation)

The redox current value was read from the cyclic voltammogram of the current value in a range of 1 to 5 V in the third cycle scanning of the second three-electrode cell. In the evaluation of the oxidation resistance of the polymer or the mixture of polymers, the result of the CV measurement of the second three-electrode cell (i.e., the molded article with a foil in the form of film) was red, in which the cumulative value of the current value was divided by the area of the working electrode (1.54 cm²) to provide a value (µA/cm²), and the voltage at which the value reached 0.05 µA/cm² was obtained. In the case where the voltage at which the cumulative value of the current value reached 0.05 µA/cm² was 4.0 V or more, the polymer or the mixture of polymers was evaluated to have excellent electrochemical stability when using in a working electrode in a battery or an electrode for batteries.

A CV measurement was further performed under the same condition as above by using the first three-electrode cell (i.e., the electrode having the polymer or the mixture of polymers excellent in electrochemical stability) produced in the section 5-1. In the case where the first three-electrode cell did not undergo both an earth fault and an abnormal increase in current value at the voltage at which the cumulative value of the current value reached 0.05 µA/cm² in the use of the second three-electrode cell, the electrode was judged as "pass". In the case where one of or both an earth fault and an abnormal increase were observed, the electrode was judged as "fail". However, there was no example that was judged as "fail" in the examples. In Reference Example 1, an electrode was unable to produce since no electrode active substance was contained, failing to evaluate an electrode, and therefore the evaluation result of the oxidation resistance of the electrode is shown as "unmeasurable" in Table 1.

### <6. Evaluation of Cycle Characteristics>

A charge and discharge cycle measurement was performed in the following manner, and the cycle characteristics were evaluated from the result obtained.

### (6-1. Production of Electrode)

A positive electrode was produced in the same manner as in the section 5-1-1.

### (6-2. Production of Coin Battery)

The positive electrode produced in the section 6-1 was transferred to a glove box (available from Miwa Manufacturing Co., Ltd.) having an argon atmosphere.

Subsequently, a coin battery was produced in the glove box in the following manner.

A housing (cell) of CR2032 was used as a housing (cell) of the coin battery. The positive electrode produced in the section 6-1 was used as a working electrode. A metallic lithium foil (thickness: 0.2 mm, diameter: 16 mm) was used as a reference and counter electrode. A polypropylene separator (Celgard (registered trademark) #2400, available from Polypore International, LLC) was used as a separator. The separator was disposed between the working electrode and the counter electrode in the housing. Each of the electrolyte solutions shown in Table 1 or Table 2 was charged as an electrolyte solution in the housing. Thereafter, the housing was sealed. A coin battery was produced in this manner. 10 cells were produced for each coin battery.

### (6-3. Charge and Discharge Cycle Measurement)

The coin batteries produced in the section 6-2 were subjected to a charge and discharge test in the following manner with a commercially available charge and discharge tester ("TOSCAT (registered trademark) 3100, available from Toyo System Co., Ltd.).

The coin battery was placed in a thermostat chamber at 25°C. A charge and discharge cycle of charging to 4.0 V with respect to the lithium potential and subsequently discharging to 3.0 V was repeatedly performed under a constant-current condition of 0.2 C for the capacity (mAh/g) per unit weight of the active substance (i.e., a constant-current charge and discharge test). In the constant-current charge and discharge test, the values of electric capacity (mAh) after completing 5 charge and discharge cycles and after completing 50 cycles were measured. The electric capacity was obtained as an average value of the measurements of the 10 cells. The ratio of the electric capacity C50 after completing 50 cycles with respect to the electric capacity C5 after completing 5 cycles (i.e., C50/C5) in terms of percentage (%) was obtained and designated as the charge and discharge capacity retention rate C.

### (6-4. Evaluation)

The charge and discharge capacity retention rate C was evaluated according to the following standard. The evaluation result means that "G" is the worst, and as progressing from "F" to "A", the cycle characteristics (battery lifetime) are improved. The evaluation results are shown in Table 1 or Table 2.
A: 95% or more
B: 92% or more and less than 95%
C: 90% or more and less than 92%
D: 80% or more and less than 90%
E: 60% or more and less than 80%
F: 30% or more and less than 60%
G: less than 30%

### [Example 1-1]

### (Production of Polymer)

In a 300 mL autoclave equipped with an agitation device and a thermometer, 2.0 g (0.026 mol) of 1,1-dicyanoethylene, 4.0 g (0.071 mol) of isobutylene, 19 mL of ethyl acetate, and 80 mg of dilauroyl peroxide were placed, and radical polymerization was performed by heating and agitating at 60°C for 4 hours under a nitrogen gas stream.

After completing the polymerization, the deposited polymer was recovered through filtration. Subsequently, the recovered polymer was washed with ethyl acetate, and then dried at 50°C under reduced pressure for 24 hours to provide the polymer in the form of powder.

The resulting polymer was a copolymer of 1,1-dicyanoethylene and isobutylene in consideration of the materials used (weight average molecular weight (Mw) by GPC: 608,000), and contained no halogen. It is also confirmed from ¹H-NMR and ¹³C-NMR described above that the copolymer was obtained.

The resulting polymer was measured for the mass degree of swelling S described above for evaluation. The results are shown in Table 1.

### (Preparation of Composition)

NCM111 was used as a positive electrode active substance. Carbon black was used as a conductive additive. NMP was used as a solvent. 95 parts by mass of the positive electrode active substance (NCM111), 2 parts by mass of the conductive additive (carbon black), 3 parts by mass of the polymer, and 47 parts by mass of the solvent (NMP) were mixed to prepare a composition. The composition was in the form of slurry.

The composition was evaluated as a binder composition for secondary batteries as described above. In the evaluation, the electrolyte solution A was used as an electrolyte solution.

### [Example 1-2]

In the evaluation of the composition obtained in Example 1-1, the electrolyte solution used was changed from the electrolyte solution A to the electrolyte solution B in Example 1-2. The evaluation was performed in the same manner as in Example 1-1 except for the above. The results are shown in Table 1.

### [Example 2]

### (Production of Polymer)

In a 300 mL autoclave equipped with an agitation device and a thermometer, 2.0 g (0.026 mol) of 1,1-dicyanoethylene, 2.7 g (0.026 mol) of styrene, and 18 mL of toluene were placed without the use of an initiator, and polymerization was performed by heating and agitating at 40°C for 3 hours under a nitrogen gas stream.

After completing the polymerization, the deposited polymer was recovered through filtration. Subsequently, the recovered polymer was washed with ethyl acetate, and then dried at 50°C under reduced pressure for 24 hours to provide the polymer in the form of powder.

The resulting polymer was a copolymer of 1,1-dicyanoethylene and styrene in consideration of the materials used (weight average molecular weight (Mw) by GPC: 298,000), and contained no halogen. It is also confirmed from ¹H-NMR and ¹³C-NMR described above that the copolymer was obtained.

The resulting polymer was measured for the mass degree of swelling S for evaluation. The results are shown in Table 1.

### (Preparation of Composition)

A composition having the same mass ratio as in Example 1-1 was prepared by using the resulting polymer and the same positive electrode active substance, conductive additive, and solvent as in Example 1-1. The resulting composition was evaluated in the same manner as in Example 1-1. In the evaluation, the electrolyte solution A was used as the electrolyte solution similar to Example 1-1.

### [Example 3-1]

### (Production of Polymer)

In a 300 mL autoclave equipped with an agitation device and a thermometer, 2.0 g (0.026 mol) of 1,1-dicyanoethylene, 5.5 g (0.064 mol) of vinyl acetate, 25 mL of ethyl acetate, and 17 mg of 2,2'-azobis(4-methoxy-2,4-dimethylvaleronitrile) were placed, and radical polymerization was performed by heating and agitating at 40°C for 6 hours under a nitrogen gas stream.

After completing the polymerization, the deposited polymer was recovered through filtration. Subsequently, the recovered polymer was washed with ethyl acetate, and then dried at 50°C under reduced pressure for 24 hours to provide the polymer in the form of powder.

The resulting polymer was a copolymer of 1,1-dicyanoethylene and vinyl acetate in consideration of the materials used (weight average molecular weight (Mw) by GPC: 560,000), and contained no halogen. It is also confirmed from ¹H-NMR and ¹³C-NMR described above that the copolymer was obtained.

The resulting polymer was measured for the mass degree of swelling S described above for evaluation. The results are shown in Table 1.

### (Preparation of Composition)

A composition having the same mass ratio as in Example 1-1 was prepared by using the resulting polymer and the same positive electrode active substance, conductive additive, and solvent as in Example 1-1. The resulting composition was evaluated in the same manner as in Example 1-1. In the evaluation, the electrolyte solution C was used as the electrolyte solution instead of the electrolyte solution A. The results are shown in Table 1.

### [Example 3-2]

In the evaluation of the composition obtained in Example 3-1, the electrolyte solution used was changed from the electrolyte solution C to the electrolyte solution D in Example 3-2. The evaluation was performed in the same manner as in Example 3-1 except for the above. The results are shown in Table 1.

### [Example 4]

### (Production of Polymer)

In a 300 mL autoclave equipped with an agitation device and a thermometer, 2.0 g (0.026 mol) of 1,1-dicyanoethylene, 2.1 g (0.024 mol) of vinyl acetate, 12 mL of ethyl acetate, and 16 mg of 2,2'-azobis(4-methoxy-2,4-dimethylvaleronitrile) were placed, and radical polymerization was performed by heating and agitating at 40°C for 6 hours under a nitrogen gas stream.

After completing the polymerization, the deposited polymer was recovered through filtration. Subsequently, the recovered polymer was washed with ethyl acetate, and then dried at 50°C under reduced pressure for 24 hours to provide the polymer in the form of powder.

The resulting polymer was a copolymer of 1,1-dicyanoethylene and vinyl acetate in consideration of the materials used (weight average molecular weight (Mw) by GPC: 182,000), and contained no halogen. It is also confirmed from ¹H-NMR and ¹³C-NMR described above that the copolymer was obtained.

The resulting polymer was measured for the mass degree of swelling S described above for evaluation.

### (Preparation of Composition)

A composition having the same mass ratio as in Example 1-1 was prepared by using the resulting polymer and the same positive electrode active substance, conductive additive, and solvent as in Example 1-1. The resulting composition was evaluated in the same manner as in Example 3-1 by using the electrolyte solution C as the electrolyte solution. The results are shown in Table 1.

### [Example 5-1]

### (Production of Polymer)

In a 100 mL autoclave equipped with an agitation device and a thermometer, 2.0 g (0.026 mol) of 1,1-dicyanoethylene, 2.7 g (0.064 mol) of propylene, 19 mL of ethyl acetate, and 16 mg of 2,2'-azobis(4-methoxy-2,4-dimethylvaleronitrile) were placed, and radical polymerization was performed by heating and agitating at 40°C for 6 hours under a nitrogen gas stream.

After completing the polymerization, the deposited polymer was recovered through filtration. Subsequently, the recovered polymer was washed with ethyl acetate, and then dried at 50°C under reduced pressure for 24 hours to provide the polymer in the form of powder.

The resulting polymer was a copolymer of 1,1-dicyanoethylene and propylene in consideration of the materials used (weight average molecular weight (Mw) by GPC: 150,000), and contained no halogen. It is also confirmed from ¹H-NMR and ¹³C-NMR described above that the copolymer was obtained.

The resulting polymer was measured for the mass degree of swelling S described above for evaluation. The results are shown in Table 1.

### (Preparation of Composition)

A composition having the same mass ratio as in Example 1-1 was prepared by using the resulting polymer and the same positive electrode active substance, conductive additive, and solvent as in Example 1-1. The resulting composition was evaluated in the same manner as in Example 1-1 by using the electrolyte solution A as the electrolyte solution. The results are shown in Table 1.

### [Example 5-2]

In the evaluation of the composition obtained in Example 5-1, the electrolyte solution used was changed from the electrolyte solution A to the electrolyte solution B in Example 5-2. The evaluation was performed in the same manner as in Example 5-1 except for the above. The results are shown in Table 1.

### [Reference Example 1]

A composition having a mass ratio (polymer/conductive additive) of 2/98 (i.e., a composition containing no electrode active substance) was prepared by using the polymer obtained in Example 1-1, a conductive additive (carbon black), and 47 parts by mass of a solvent (NMP). The resulting composition was in the form of slurry.

The composition was evaluated in the same manner as in Example 1-2 by using the electrolyte solution B as the electrolyte solution. The results are shown in Table 1. However, charge-discharge cycle measurements could not be performed, as they were not feasible.

### [Reference Example 2]

The evaluation was performed in the same manner as in Example 1-1 by using the electrolyte solution A as the electrolyte solution except that the polymer was changed to PVDF. The results are shown in Table 1.

### [Table 1]

**Table 1**

| | | | Reference Example 1 | Example 1-1 | Example 1-2 | Example 2 |
|---|---|---|---|---|---|---|
| Polymer | Constitutional unit (a) | Raw material monomer | 1,1-dicyanoethylene | | | 1,1-dicyanoethylene |
| | Constitutional unit (b) | Raw material monomer | Isobutylene | | | Styrene |
| | | e-value of raw material monomer | -1.20 | | | -0.80 |
| | Form of polymer | | Copolymer containing no halogen | | | Copolymer containing no halogen |
| | Content of constitutional unit (a) (% by mol) | | 50 | | | 50 |
| | Proportion of alternating copolymerization structure (% by mol) | | 99 | | | 94 |
| | Swellability | Electrolyte solution | Electrolyte solution B | Electrolyte solution A | Electrolyte solution B | Electrolyte solution A |
| | | Mass degree of swelling S (% by mass) | 231 | 197 | 231 | 472 |
| Composition | Polymer (% by mass) (*1) | | 98 | 3 | | 3 |
| | Electrode active substance (NCM111) (% by mass) (*1) | | - | 95 | | 95 |
| | Conductive additive (carbon black) (% by mass) (*1) | | 2 | 2 | | 2 |
| | Total amount of composition (% by mass) (* 1) | | 100 | 100 | | 100 |
| Evaluation of electrode or battery | Electrochemical stability | Oxidation resistance of polymer (voltage) (V) | 4.7 | 4.7 | 4.7 | 4.4 |
| | | Evaluation result of oxidation resistance of electrode | Unmeasurable | Pass | Pass | Pass |
| | Cycle characteristics | Evaluation result of electric capacity retention rate C | Unmeasurable | A | A | B |

| | | | | | | |
|---|---|---|---|---|---|---|
| (*1) based on total amount of 100% by mass of composition except for solvent (NMP) | | | | | | |

(continued)

**Table 1 (continued)**

| | | | Example 3-1 | Example 3-2 | Example 4 |
|---|---|---|---|---|---|
| Polymer | Constitutional unit (a) | Raw material monomer | 1,1-dicyanoethylene | | 1,1-dicyanoethylene |
| | Constitutional unit (b) | Raw material monomer | Vinyl acetate | | Vinyl acetate |
| | | e-value of raw material monomer | -0.88 | | -0.88 |
| | Form of polymer | | Copolymer containing no halogen | | Copolymer containing no halogen |
| | Content of constitutional unit (a) (% by mol) | | 49 | | 50 |
| | Proportion of alternating copolymerization structure (% by mol) | | 94 | | 89 |
| | Swellability | Electrolyte solution | Electrolyte solution C | Electrolyte solution D | Electrolyte solution C |
| | | Mass degree of swelling S (% by mass) | 241 | 780 | 211 |
| Composition | Polymer (% by mass) (*1) | | 3 | | 3 |
| | Electrode active substance (NCM111) (% by mass) (*1) | | 95 | | 95 |
| | Conductive additive (carbon black) (% by mass) (*1) | | 2 | | 2 |
| | Total amount of composition (% by mass) (* 1) | | 100 | | 100 |
| Evaluation of electrode or battery | Electrochemical stability | Oxidation resistance of polymer (voltage) (V) | 4.2 | 4.2 | 4.0 |
| | | Evaluation result of oxidation resistance of electrode | Pass | Pass | Pass |
| | Cycle characteristics | Evaluation result of electric capacity retention rate C | B | D | C |

| | | | | | |
|---|---|---|---|---|---|
| (*1) based on total amount of 100% by mass of composition except for solvent (NMP) | | | | | |

(continued)

**Table 1 (continued)**

| | | | Example 5-1 | Example 5-2 | Reference Example 2 |
|---|---|---|---|---|---|
| Polymer | Constitutional unit (a) | Raw material monomer | 1,1-dicyanoethylene | | PVDF |
| | Constitutional unit (b) | Raw material monomer | propylene | | |
| | | e-value of raw material monomer | -1.69 | | |
| | Form of polymer | | Copolymer containing no halogen | | Copolymer containing fluorine |
| | Content of constitutional unit (a) (% by mol) | | 49 | | - |
| | Proportion of alternating copolymerization structure (% by mol) | | 95 | | - |
| | Swellability | Electrolyte solution | Electrolyte solution A | Electrolyte solution B | Electrolyte solution A |
| | | Mass degree of swelling S (% by mass) | 246 | 295 | 657 |
| Composition | Polymer (% by mass) (*1) | | 3 | | 3 |
| | Electrode active substance (NCM111) (% by mass) (*1) | | 95 | | 95 |
| | Conductive additive (carbon black) (% by mass) (*1) | | 2 | | 2 |
| | Total amount of composition (% by mass) (* 1) | | 100 | | 100 |
| Evaluation of electrode or battery | Electrochemical stability | Oxidation resistance of polymer (voltage) (V) | 5.0 | 5.0 | 4.0 |
| | | Evaluation result of oxidation resistance of electrode | Pass | Pass | Pass |
| | Cycle characteristics | Evaluation result of electric capacity retention rate C | A | A | A |

| | | | | | |
|---|---|---|---|---|---|
| (*1) based on total amount of 100% by mass of composition except for solvent (NMP) | | | | | |

It was understood from Table 1 that the compositions according to Examples were able to reduce the halogen content at least by the amount of the constitutional unit (a) derived from 1,1-dicyanoethylene contained in the polymer (A), and thereby were able to reduce the environmental load. It was also understood that the polymer (A) contained in the compositions according to Examples was excellent in the swellability in an electrolyte solution and the oxidation resistance, and therefore the compositions according to Examples were useful as a binder composition for batteries.

It was also understood that the compositions according to Examples had excellent electrochemical stability in the case where an electrode or a battery was produced therewith.

### [Examples 6 to 9]

The same evaluation as in Example 1-1 was performed by using the electrolyte solution A as the electrolyte solution except that two kinds of the polymers were used in the ratio shown in Table 2. The results are shown in Table 2.

### [Table 2]

**Table 2**

| | | | Example 6 | Example 7 | Example 8 | Example 9 |
|---|---|---|---|---|---|---|
| Mixture of polymers | Polymer used in Example 1-1 (% by mass) | | 50 | 80 | 20 | 50 |
| | Polymer used in Example 2 (% by mass) | | 50 | | | |
| | Polymer used in Example 5-1 (% by mass) | | | 20 | 80 | 50 |
| | Total amount of mixture (total of polymers) (% by mass) | | 100 | 100 | 100 | 100 |
| | Swellability | Electrolyte solution | Electrolyte solution A | Electrolyte solution A | Electrolyte solution A | Electrolyte solution A |
| | | Mass degree of swelling S (% by mass) | 344 | 222 | 240 | 228 |
| Composition | Mixture of polymers (% by mass) (*1) | | 3 | 3 | 3 | 3 |
| | Electrode active substance (NCM1 11) (% by mass) (*1) | | 95 | 95 | 95 | 95 |
| | Conductive additive (carbon black) (% by mass) (*1) | | 2 | 2 | 2 | 2 |
| | Total amount of composition (% by mass) (* 1) | | 100 | 100 | 100 | 100 |
| Evaluation of electrode or battery | Electrochemical stability | Oxidation resistance of mixture of polymers (voltage) (V) | 4.5 | 4.8 | 4.9 | 4.8 |
| | | Evaluation result of oxidation resistance of electrode | Pass | Pass | Pass | Pass |
| | Cycle characteristics | Evaluation result of electric capacity retention rate C | B | A | A | A |

| | | | | | | |
|---|---|---|---|---|---|---|
| (* 1) based on total amount of 100% by mass of composition except for solvent (NMP) | | | | | | |

It was understood from Table 2 that in the case where multiple kinds of the polymers (A) as one aspect of the present invention were used, the polymer (A) was excellent in the swellability in an electrolyte solution and the oxidation resistance as similar to the case where the polymer (A) was used alone.

It was also understood that the compositions according to Examples 6 to 9 had excellent electrochemical stability in the case where an electrode or a battery was produced therewith.

## Claims

1. A composition comprising a polymer (A) containing a constitutional unit (a) derived from 1,1-dicyanoethylene, and an electrode active substance.

2. The composition according to claim 1, wherein the polymer (A) is a copolymer containing at least one kind of a constitutional unit (b) derived from a compound represented by the following general formula (1):
CH₂=CR¹R² (1)
wherein,
R¹ represents one kind selected from the group consisting of a hydrogen atom, an alkyl group, a cycloalkyl group, an aryl group, an alkoxy group, and a nitrile group, and
R² represents one kind selected from the group consisting of a hydrogen atom, an alkyl group, an alkoxy group, a carboxy group, an ester group represented by -COOR³ (wherein R³ represents an alkyl group having 1 to 12 carbon atoms), an acid anhydride group, an acyl group represented by -COR⁴ (wherein R⁴ represents an alkyl group having 1 to 12 carbon atoms), an acyloxy group represented by -OCOR⁵ (wherein R⁵ represents an alkyl group having 1 to 12 carbon atoms), and a cyanoalkyl group.

3. The composition according to claim 2, wherein the compound represented by the general formula (1) is at least one kind selected from the group consisting of ethylene, propylene, vinyl acetate, methyl methacrylate, styrene, and isobutylene.

4. The composition according to claim 2, wherein the compound represented by the general formula (1) has an e-value of 0.50 or less.

5. The composition according to claim 2, wherein the polymer (A) contains an alternating copolymerization structure [(b)-(a)-(b)] formed by bonding two of the constitutional units (b) to both sides of the constitutional unit (a) at the center, and the polymer (A) has a content of the constitutional unit (a) that forms the alternating copolymerization structure [(b)-(a)-(b)] of 80% by mol or more based on 100% by mol in total of the constitutional unit (a) contained in the polymer (A).

6. The composition according to claim 1, wherein the polymer (A) has a content of the constitutional unit (a) of 25 to 75% by mol based on the total amount of 100% by mol of the constitutional units of the polymer (A).

7. The composition according to claim 1, wherein the polymer (A) has a mass degree of swelling in an electrolyte solution of 101 to 800% by mass.

8. The composition according to claim 1, wherein the polymer (A) has a voltage value at which a cumulative value of a current value calculated by a cyclic voltammetry measurement reaches 0.05 µA/cm² of 4.0 V or more.

9. A binder composition for secondary batteries, comprising a polymer (A) containing a constitutional unit (a) derived from 1,1-dicyanoethylene, and an electrode active substance.

10. The binder composition for secondary batteries according to claim 9, wherein the electrode active substance is a positive electrode active substance.

11. A molded article formed with the composition according to any one of claims 1 to 8 or the binder composition for secondary batteries according to claim 9.

12. An electrode comprising the molded article according to claim 11.

13. A battery comprising the molded article according to claim 11.
